(19) Europäisches Patentamt
European Patent Office
Office européen des brevets

(11) EP 4 137 524 A1

(12) # EUROPÄISCHE PATENTANMELDUNG

(43) Veröffentlichungstag:
**22.02.2023 Patentblatt 2023/08**

(21) Anmeldenummer: **21191597.0**

(22) Anmeldetag: **17.08.2021**

(51) Internationale Patentklassifikation (IPC):
***C08G 18/38*** (2006.01) ***C08G 18/10*** (2006.01)
***C08G 18/72*** (2006.01) ***C08G 18/73*** (2006.01)
***C08G 18/79*** (2006.01) ***C09D 175/02*** (2006.01)
***E04B 1/00*** (2006.01) ***F01D 7/00*** (2006.01)

(52) Gemeinsame Patentklassifikation (CPC):
(C-Sets verfügbar)
**C08G 18/73; C08G 18/10; C08G 18/3821;**
**C08G 18/721; C08G 18/792; C08G 18/798;**
**C09D 175/02** (Forts.)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder:
- **DURGUT, Erkan**
  **44867 Bochum (DE)**
- **GRESZTA-FRANZ, Dorota**
  **42659 Solingen (DE)**
- **WINTERMANTEL, Matthias**
  **50354 Hürth (DE)**

(74) Vertreter: **Levpat**
**c/o Covestro AG**
**Gebäude K12**
**51365 Leverkusen (DE)**

(54) **NEUE ZWEIKOMPONENTEN-BESCHICHTUNGSSYSTEME ENTHALTEND POLYASPARAGINSÄUREESTER**

(57) Die vorliegende Erfindung betrifft Zweikomponenten-Beschichtungssysteme enthaltend Polyasparaginsäureester mit nur geringen Mengen an Fumarsäuredialkylester, ein Verfahren zu deren Herstellung und deren Einsatz zur Herstellung von Beschichtungen, im Besonderen für die Bereiche Bau und Windenergie. Als Beispiel sei die Verwendung zur Dachbeschichtung, zur Fußbodenbeschichtung und zur Beschichtung von Rotorblättern bei Windrädern, bzw. deren Führungskanten (Leading Edge) genannt.

EP 4 137 524 A1

(52) Gemeinsame Patentklassifikation (CPC): (Forts.)

C-Sets
**C08G 18/10, C08G 18/3821**

## Beschreibung

Die vorliegende Erfindung betrifft Zweikomponenten-Beschichtungssysteme enthaltend Polyasparaginsäureester mit nur geringen Mengen an Fumarsäuredialkylester, ein Verfahren zu deren Herstellung und deren Einsatz zur Herstellung von Beschichtungen, im Besonderen für die Bereiche Bau und Windenergie. Als Beispiel sei die Verwendung zur Dachbeschichtung, zur Fußbodenbeschichtung und zur Beschichtung von Rotorblättern bei Windrädern, bzw. deren Führungskanten (Leading Edge) genannt.

Zweikomponenten (2K)-Beschichtungsmittel, die als Bindemittel eine Polyisocyanatkomponente in Kombination mit einer gegenüber Isocyanatgruppen reaktionsfähigen Reaktivkomponente, insbesondere einer Polyhydroxylkomponente enthalten, sind seit langem bekannt. Sie eignen sich zur Herstellung von hochwertigen Überzügen, die hart, elastisch, abrieb- und lösemittelbeständig und vor allem auch witterungsstabil eingestellt werden können.

Innerhalb dieser 2K-Polyurethan-Beschichtungstechnologie haben sich in letzter Zeit bestimmte, estergruppenhaltige, sekundäre Polyamine etabliert, die sogenannten Polyasparaginsäureester oder Polyaspartate, die sich in Kombination mit Lackpolyisocyanaten insbesondere als Bindemittel in lösemittelarmen oder -freien (high solids) Beschichtungsmitteln eignen und eine rasche Aushärtung der Beschichtungen bei niedrigen Temperaturen ermöglichen.

Die Verwendung von Polyasparaginsäureestern allein oder in einem Gemisch mit weiteren, gegenüber Isocyanatgruppen reaktionsfähigen Komponenten in 2K-Beschichtungsmitteln wird beispielsweise in der EP0403921, EP0639628, EP0667362, EP0689881, US5214086, EP0699696, EP0596360, EP0893458, DE19701835, EP0470461, WO15130501, WO15130502 und US5243012 beschrieben.

Die Herstellung von aminofunktionellen Asparaginsäureestern ist an sich bekannt. Die Synthese erfolgt über eine Addition von primären Polyaminen und/oder Polyetheraminen an eine aktivierte Kohlenstoff-Doppelbindung vinyloger Carbonylverbindungen, wie beispielsweise in Malein- oder Fumarsäureestern enthalten, die in der Literatur hinreichend beschrieben ist (Hauben Weyl, Meth. d. Org. Chemie Bd. 11/1, 272 (1957), Usp. Khim. 1969, 38, 1933). Bei dieser Reaktion kann es zur Bildung eines Polyasparaginsäureester mit primären Aminogruppen als Nebenprodukt kommen, wenn nur eine Aminogruppe des Polyamins/Polyetheramins mit der Doppelbindung der vinylogen Carbonylverbindungen reagiert hat. In den kommerziell erhältlichen Polyasparaginsäureestern wird Maleinsäureester als die vinyloge Carbonylverbindung eingesetzt. Während der Herstellung eines Polyasparaginsäureester auf Basis von Maleinsäureester kann eine retro-Michael Addition als eine weitere unerwünschte Nebenreaktion erfolgen, bei der durch Eliminierung des Polyamins als Nebenkomponente Fumarsäuredialkylester gebildet wird. Ein typisches Herstellverfahren eines Polyasparaginsäureesters erfordert daher eine Lagerzeit von 4-6 Wochen nachdem der Hauptteil der Edukte miteinander reagiert hat. In dieser Zeit erfolgt die sogenannte Reifung des Produktes, welche sich durch Stabilisierung der Viskosität manifestiert. Dadurch, dass der Umsatz innerhalb dieser Zeit weiter steigt, sinkt auch der Gehalt an Fumarsäuredialkylester. Diese Lagerung über mehrere Wochen führt zu erheblichen Logistik-Kosten innerhalb der Produktion. Obwohl das Produkt erst nach der Lagerung an den Kunden ausgeliefert wird, enthält es immer noch substantielle Mengen Fumarsäuredialkylester, welches eine starke Sensibilisierung verursachen kann. Die so hergestellten Polyasparaginsäureester enthalten nach der Reifung üblicherweise noch Reste von 3 bis 20 Gewichtsprozent an Fumarsäureester. Eine verlängerte Lagerung würde zwar den Gehalt an Fumaräureester weiter auf ca. 1 Gewichtsprozent erniedrigen, aber zu Ungunsten anderer Eigenschaften, wie Farbe oder Viskosität.

WO2019/057626A1 und WO2019/057627A1 offenbaren die Herstellung von Polyasparaginsäureestern mit deutlich verringertem Fumarsäuredialkylestergehalt mittels eines speziellen Destillationsverfahrens.

Wie bereits zuvor erwähnt, können Polyasparaginsäureester zur Herstellung von lösemittelarmen oder -freien (high solids) Beschichtungsmitteln eingesetzt werden. Dies ist ein wesentlicher Aspekt in Bezug auf die Arbeitshygiene, im Besonderen, wenn z.B. in geschlossenen Räumen gearbeitet wird, wie beispielsweise bei der Beschichtung von Fußböden. Polyasparaginsäureester lassen sich unterscheiden in solche, die auf (ethergruppen-freien) Polyaminen und solche, die auf Polyetheraminen basieren. Polyasparaginsäureester auf Basis von Polyetheraminen weisen eine deutlich geringere Viskosität auf als Polyasparaginsäureester auf Basis von Polyaminen. Polyetheramin-basierte Polyasparaginsäureester lassen sich daher als Verdünner für Polyaminbasierte Polyasparaginsäureester verwenden. Auf diese Weise lässt sich Lösemittel sparen, bzw. kann ganz darauf verzichtet werden. Die Verwendung entsprechender Polyasparaginsäuremischungen zur Herstellung von Beschichtungsmittel für Fußböden ist daher gängig (z.B. Fachartikel in Farbe und Lack, 11/2017, Seiten 30 bis 35). Allerdings zeigen Beschichtungen, die mit entsprechenden Beschichtungsmitteln des Standes der Technik beschichtet wurden, bislang eine nicht ausreichende Zug- und Weiterreißfestigkeit, wenn sie höheren mechanischen Belastungen ausgesetzt sind, wie dies z.B. bei Industrieböden der Fall ist.

Die Aufgabe der vorliegenden Erfindung bestand in der Bereitstellung einer Beschichtungszusammensetzung auf Basis von Polyasparaginsäureestermischungen zur Herstellung von Beschichtungen mit verbesserten mechanischen Eigenschaften, wie einer verbesserten Zug- und Weiterreißfestigkeit.

Überraschend wurde gefunden, dass diese Aufgabe durch Beschichtungszusammensetzungen auf Basis von Polyasparaginsäureestermischungen mit einem stark reduzierten Gehalt an Fumarsäuredialkylester gelöst werden kann. Der Gehalt an Fumarsäuredialkylester in der Polyasparaginsäureester-haltigen Komponente liegt erfindungsgemäß bei

0,01 bis 1,5 Gew.-%, bezogen auf das Gesamtgewicht der Polyasparaginsäureester-haltigen Komponente, und kann durch ein spezielles Destillationsverfahren auf diese Werte reduziert werden.

Die bereits oben erwähnte WO2019/057626A1 beschreibt neben der Herstellung von Polyasparaginsäureestern mit deutlich verringertem Fumarsäuredialkylestergehalt auch deren Verwendung in Beschichtungsmitteln. Es wird die Synthese von Polyamin-basierten und Polyetheramin-basierten Polyasparaginsäureestern aufgezeigt. Die Verwendung speziell einer Mischung aus beiden Verbindungsklassen zur Herstellung von Beschichtungsmitteln wird jedoch nicht offenbart; noch weniger, dass gerade ein stark reduzierter Gehalt an Fumarsäuredialkylestern in diesen Mischungen zu Beschichtungen mit sehr hoher Zug- und Weiterreißfestigkeit führt..

Auch die WO2020/169700A1 und die WO2020/169701A1 beschreiben Beschichtungsmittel auf Basis von Polyasparaginsäureestern mit verringertem Fumarsäuredialkylestergehalt. Auch hier wird die Verwendung von Polyamin-basierten bzw. Polyetheramin-basierten Polyasparaginsäureestern beschrieben, nicht jedoch die Verwendung speziell von Mischungen davon. Auch hier gibt es keinen Hinweis auf den Zusammenhang zwischen einem niedrigem Fumarsäuredialkylestergehalt solcher Mischungen und dem darauf basierenden Effekt einer deutlich verbesserten Zug- und Weiterreißfestigkeit der unter Verwendung solcher Mischungen erhältlichen Beschichtungen.

Gegenstand der vorliegenden Erfindung sind zweikomponentige Beschichtungszusammensetzungen (2K-Beschichtungsmittel), enthaltend

a) mindestens eine Polyasparaginsäureester-haltige Komponente A,
b) mindestens eine Polyisocyanatkomponente B
c) gegebenenfalls eine oder mehrere, von A verschiedene, gegenüber Isocyanatgruppen reaktionsfähige Komponenten C, und
d) gegebenenfalls Hilfs- und Zusatzstoffe D,

wobei Komponente A Zusammensetzungen entspricht, enthaltend

A1) einen oder mehrere Polyasparaginsäureester der allgemeinen Formel (I)

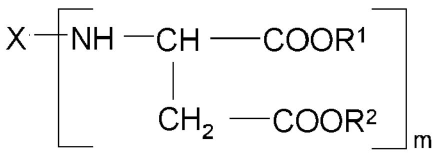

(I),

in welcher

X für einen m-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,

$R^1$ und $R^2$ für gleiche oder verschiedene organische Reste, mit je 1 bis 18 Kohlenstoffatomen stehen,

m für eine ganze Zahl >1, bevorzugt für 2 steht,

und

gegebenenfalls einen oder mehrere Polyasparaginsäureester mit primärer Aminogruppe der allgemeinen Formel (II)

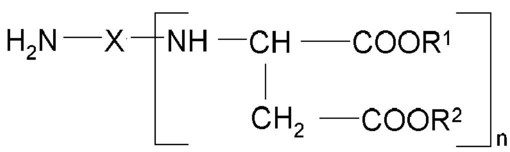

(II)

in welcher

n für m-1 steht, und
m, X und die Reste $R^1$ und $R^2$ die oben genannten Bedeutungen haben,

und

A2) einen oder mehrere Polyasparaginsäureester der allgemeinen Formel (III)

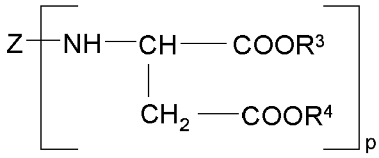

(III),

in welcher

Z für einen p-wertigen, gegebenenfalls ein oder mehrere Heteroatome enthaltenden organischen Rest steht, wie er durch Entfernung der primären Aminogruppen aus einem entsprechenden, aliphatisch gebundene primäre Aminogruppen aufweisenden Polyetherpolyamin des Molekulargewichtsbereichs 200 bis 2000 g/mol erhalten werden kann, und der weitere, gegenüber Isocyanatgruppen reaktive und/oder bei Temperaturen bis 100°C inerte funktionelle Gruppen enthalten kann,

$R^3$ und $R^4$ für gleiche oder verschiedene organische Reste, mit je 1 bis 18 Kohlenstoffatomen stehen,

p für eine ganze Zahl >1, bevorzugt für 2 oder 3 steht,

wobei Komponente A2 in einem Anteil von 1 bis 80 Gewichts-% (≥ 1 bis ≤ 80 Gewichts-%), bezogen auf das Gesamtgewicht der Komponenten A1 und A2, vorhanden ist, und
wobei in Komponente A Fumarsäuredialkylester in einer Menge von 0,01 bis 1,5 Gewichts-% (≥ 0,01 bis ≤ 1,5 Gewichts-%), bezogen auf das Gesamtgewicht der Komponente A, vorliegen.

Es sei an dieser Stelle klargestellt, dass im Rahmen der vorliegenden Erfindung Polyetherpolyamine nicht zur Verbindungsklasse der Polyamine zu zählen sind.

Komponente A1:

Bevorzugt sind Polyasparaginsaureester-haltige Komponenten A Zusammensetzungen, enthaltend als Komponente A1 einen oder mehrere Polyasparaginsäureester der allgemeinen Formeln (I) und gegebenenfalls (II) bei denen $R^1$ und $R^2$ für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste stehen. Am meisten bevorzugt ist Ethyl.

Polyasparaginsaureester-haltige Komponenten A sind Zusammensetzungen, enthaltend als Komponente A1 einen oder mehrere Polyasparaginsäureester der allgemeinen Formeln (I) und gegebenenfalls (II), bei denen X für organische Reste steht, die durch Entfernung der primären Aminogruppen aus einem entsprechenden, primäre Aminogruppen aufweisenden Polyamin erhalten werden, ausgewählt aus der folgenden Gruppe: alle bekannten Polyamine mit primären Aminogruppen, die der allgemeinen Formel (IV)

$$X\left[NH_2\right]_m \quad \text{(IV)}$$

entsprechen, wobei

X für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann, und

m für eine ganze Zahl > 1, bevorzugt für 2 steht.

Beispielhaft seien die folgenden Verbindungen genannt: Ethylendiamin, 1,2-Diaminopropan, 1,4-Diaminobutan, 1,5-Diaminopentan, 2,5-Diamino-2,5-dimethylhexan, 1,5-Diamino-2-methylpentan (Dytek®A, Fa Invista), 1,6-Diaminohexan, 2,2,4- und/oder 2,4,4-Trimethyl-1,6-diaminohexan, 1,11-Diaminoundecan, 1,12-Diaminododecan oder Triaminononan. Ebenfalls einsetzbar sind aliphatische polyzyklische Polyamine, wie Tricyclodecanbismethylamin (TCD-Diamin) oder Bis(aminomethyl)norbornane, amino-funktionelle Siloxane, z.B. Diaminopropylsiloxan G10 DAS (Fa. Momentive), Fettalkyl-basierte Amine, wie z.B. Fentamine der Fa. Solvay, Dimerfettsäurediamine wie z.B Priamine der Fa. Croda.
Bevorzugt sind Polyasparaginsaureester-haltige Komponenten A Zusammensetzungen, enthaltend als Komponente A1 einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (IV) erhalten wird, worin m = 2 bedeutet und X für einen cyclischen Kohlenwasserstoffrest mit mindestens einem cyclischen Kohlenstoffring steht. Beispiele für besonders bevorzugt einsetzbare Diamine sind 1-Amino-3,3,5-trimethyl-5-aminomethylcyclohexan (IPDA), 2,4- und/oder 2,6-Hexahydrotoluylendiamin (H6-TDA), Isopropyl-2,4-diaminocyclohexan, und/oder Isopropyl-2,6-diaminocyclohexan, 1,3-Bis-(aminomethyl)-cyclohexan, 2,4'-, und/oder 4,4'-Diamino-dicyclohexylmethan, 3,3'-Dimethyl-4,4'-diamino-dicyclohexylmethan (Laromin® C 260, Fa. BASF AG), die isomere, eine Methylgruppe als Kernsubstituenten aufweisende Diaminodicyclohexylmethane (=C-Monomethyldiaminodicyclohexylmethane), 3(4)-Aminomethyl-1-methylcyclohexylamin (AMCA) sowie araliphatische Diamine, wie z.B. 1,3-Bis-(aminomethyl)-benzol oder m-Xylylendiamin.
Ebenfalls bevorzugt sind Polyasparaginsaureester-haltige Komponenten A Zusammensetzungen, enthaltend als Komponente A1 einen oder mehrere Polyasparaginsäureester der allgemeinen Formeln (I) und gegebenenfalls (II) bei denen X für organische Reste steht, die durch Entfernung der primären Aminogruppen aus einem der Polyamine der allgemeinen Formel (IV) erhalten wird, ausgewählt aus der Gruppe: 1,2 Diaminopropan, 1,4-Diaminobutan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 1,5-Diaminopentan, 2,4'- und/oder 4,4'-Diamino-dicyclohexylmethan oder 3,3'-Dimethyl-4,4'-diamino-dicyclohexylmethan. Besonders bevorzugt sind 3,3'-Dimethyl-4,4'-diamino-dicyclohexylmethan, 1,5-Diaminopentan, 2,4'- und/oder 4,4'-Diaminodicyclohexylmethan, 1,5-Diamino-2-methylpentan und ganz besonders bevorzugt ist die Verwendung von 2,4'- und/oder 4,4'-Diaminodicyclohexylmethan.
Besonders bevorzugt sind Polyasparaginsaureester-haltige Komponenten A Zusammensetzungen, enthaltend als Komponente A1 einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (IV) erhalten wird, ausgewählt aus der Gruppe: 1,2 Diaminopropan, 1,4-Diaminobutan, 1,5-Diaminopentan, 1,6-Diaminohexan, 1,5-Diamino-2-methylpentan, 2,5 Diamino-2,5-dimethylhexan, 2,2,4- und/oder 2,4,4-Trimethyl-1,6-diaminohexan, 1,11-Diaminounodecan, 1,12-Diaminododecan, 1-Amino-3,3,5-trimehtyl-5-aminomethylcyclohexan, 2,4- und/oder 2,6-Hexahydrotoluylendiamin, 2,4'- und/oder 4,4'-Diamino-dicyclohexylmethan oder 3,3'-Dimethyl-4,4'diamino-dicyclohexylmethan.
Ganz besonders bevorzugt sind Polyasparaginsaureester-haltige Komponenten A Zusammensetzungen, enthaltend als Komponente A1 einen oder mehrere Polyasparaginsäureester der allgemeinen Formeln (I) und gegebenenfalls (II), bei denen X für organische Reste steht, die durch Entfernung der primären Aminogruppen aus einem der Polyamine der allgemeinen Formel (IV) erhalten wird, ausgewählt aus der Gruppe: 3,3'-Dimethyl-4,4'diaminodicyclohexylmethan, 2,4'- und/oder 4,4'-Diaminodicyclohexylmethan, 1,5-Diamino-2-methylpentan.
Index m steht für eine ganze Zahl > 1 und bevorzugt für 2.

<u>Komponente A2:</u>

Bevorzugt sind Polyasparaginsaureester-haltige Komponenten A Zusammensetzungen, enthaltend als Komponente A2 einen oder mehrere Polyasparaginsäureester der allgemeinen Formeln (III) bei denen $R^3$ und $R^4$ für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste stehen. Am meisten bevorzugt ist Ethyl.
Polyasparaginsaureester-haltige Komponenten A sind Zusammensetzungen, enthaltend als Komponente A2 einen oder mehrere Polyasparaginsäureester der allgemeinen Formeln (III), bei denen Z für organische Reste steht, die durch Entfernung der primären Aminogruppen aus einem entsprechenden, primäre Aminogruppen aufweisenden Polyetherpolyamin erhalten werden, ausgewählt aus der folgenden Gruppe: alle bekannten Polyetherpolyamine mit primären Aminogruppen, die der allgemeinen Formel (V)

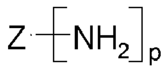

(V)

entsprechen, wobei

Z für einen p-wertigen, gegebenenfalls ein oder mehrere Heteroatome enthaltenden organischen Rest steht, wie er durch Entfernung der primären Aminogruppen aus einem entsprechenden, aliphatisch gebundene primäre Aminogruppen aufweisenden Polyetherpolyamin des Molekulargewichtsbereichs 200 bis 2000 g/mol erhalten werden kann, und der weitere, gegenüber Isocyanatgruppen reaktive und/oder bei Temperaturen bis 100°C inerte funktionelle Gruppen enthalten kann, und

p für eine ganze Zahl > 1, bevorzugt für 2 oder 3 steht.

Beispielhaft seien die folgenden Verbindungen genannt: Niedermolekulare Polyetherpolyamine, wie z.B. 4,9-dioxadodecane-1,12-diamine und 4,7,10-trioxatridecane-1,13-diamine, und höhermolekulare Polyetherpolyamine mit aliphatisch gebundenen, primären Aminogruppen. Zu den letztgenannten, d.h. den höhermolekularen Polyetherpolyaminen, gehören beispielsweise Verbindungen, die wenigstens eine Repetiereinheit der folgenden allgemeinen Formel (VI) aufweisen:

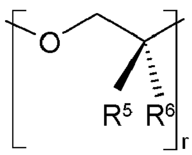

(VI),

worin r eine Zahl von 2 bis 35 ist und $R^5$ und $R^6$ unabhängig voneinander für Wasserstoff oder einen $C_1$- bis $C_4$-Alkylrest stehen.

Darunter fallen z.B. Polyetherpolyamine auf Basis von Ethylenoxid, Propylenoxid oder einer Mischung von Ehylenoxid und Propylenoxid mit einer Aminogruppen-Funktionalität von 2 oder 3. Bevorzugte aminogruppenhaltige Polyether dieser Art entsprechend den folgenden allgemeinen Formeln (VII) bis (X)

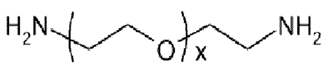

(VII),

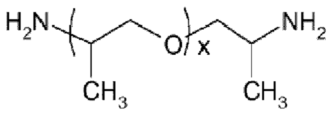

(VIII),

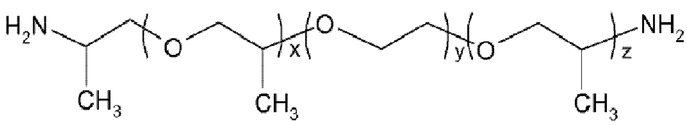

(IX),

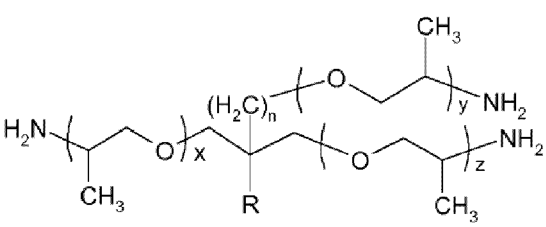

(X),

worin x eine Zahl von 0 bis10, y ist eine Zahl von 0 bis 40 und z ist eine Zahl von 0 bis 10 ist. Beispiele solcher Polyetherpolyamine sind die unter dem Namen JEFFAMINE® von der Huntsman Corporation erhältlichen Produkte oder entsprechende von der BASF SE unter den Namen Baxxodur vertriebenen Produkte.

Besonders bevorzugt werden Polyetherpolyamine eingesetzt, die

i) der Formel (VIII)

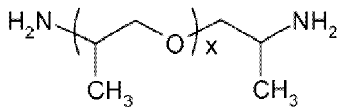

entsprechen, worin x eine Zahl von 2 bis 8, insbesondere 2,5 bis 6,1 ist. Diese Polyetherpolyamine entsprechen beispielsweise Polyetherpolyaminen der Serie JEFFAMINE® D der Huntsman Corporation, insbesondere JEFFAMINE® D-230 und JEFFAMINE® D-400.

ii) der Formel (IX)

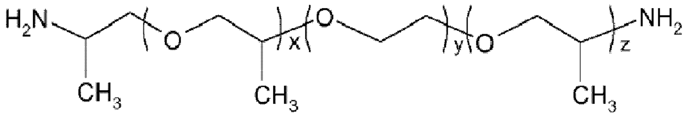

entsprechen, wobei y eine Zahl von 5 bis 40 ist und die Summe von x + z eine Zahl von 3 bis 8 ist. Diese Polyetherpolyamine entsprechen beispielsweise Polyetherpolyaminen der Serie JEFFAMINE® ED der Huntsman Corporation. Im Besonderen ist y etwa 9,0 und x + z ist etwa 3,6 oder y ist etwa 12,5 und x + z ist etwa 6,0 (entsprechend beispielsweise JEFFAMINE® ED-600 bzw. JEFFAMINE® ED-900).

iii) der Formel (X)

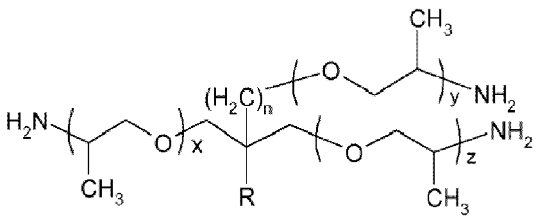

entsprechen, wobei R = Wasserstoff, $CH_3$ oder $C_2H_5$, n = 0, 1 oder 2 und x + y + z = eine Zahl von 3 bis 100. Diese Polyetherpolyamine entsprechen beispielsweise Polyetherpolyaminen der Serie JEFFAMINE® T. Insbesondere ist R = $C_2H_5$, n = 1 und x + y + z = 5 bis 6 (entsprechend beispielsweise JEFFAMINE® T-403).

Ganz besonders bevorzugt ist die Verwendung von Polyetherpolyaminen der Formel (VIII), worin x eine Zahl von 2 bis 8, insbesondere 2,5 bis 6,1 ist (obiger Unterpunkt i).

Polyasparaginsaureester-haltige Komponenten A sind Zusammensetzungen, enthaltend eine Komponente A1 und eine Komponente A2, wobei Komponente A2 in einem Anteil ≥ 1 bis ≤ 80 Gew.-%, bevorzugt ≥ 10 bis ≤ 80 Gew.-%, besonders bevorzugt ≥ 25 bis ≤ 55 Gew.-%, ganz besonders bevorzugt ≥ 30 bis ≤ 50 Gew.-%, bezogen auf das Gesamtgewicht der Komponenten A1 und A2, vorhanden ist.

Polyasparaginsaureester-haltige Komponenten A sind Zusammensetzungen, enthaltend einen oder mehrere Polyasparaginsäureester der allgemeinen Formeln (I) und gegebenenfalls Formel (II), sowie der allgemeinen Formel (III) mit einem Anteil ≥ 0,01 bis ≤ 1,5 Gew.-%, bevorzugt ≥ 0,01 bis ≤ 1,3 Gew.-%, besonders bevorzugt ≥ 0,01 bis ≤ 1 Gew.-%, noch mehr bevorzugt ≥ 0,01 bis ≤ 0,1 Gew.-%, am meisten bevorzugt ≥ 0,01 bis ≤ 0,05 Gew.-%, bezogen auf das Gesamtgewicht der Komponente A, an Fumarsäuredialkylestern.

Bevorzugt sind Polyasparaginsaureester-haltige Komponenten A Zusammensetzungen, wobei Komponente A2 in einem Anteil ≥ 1 bis ≤ 80 Gew.-%, bevorzugt ≥ 10 bis ≤ 80 Gew.-%, besonders bevorzugt ≥ 25 bis ≤ 55 Gew.-%, ganz besonders bevorzugt ≥ 30 bis ≤ 50 Gew.-%, bezogen auf das Gesamtgewicht der Komponenten A1 und A2, vorhanden ist, und Fumarsäuredialkylester mit einem Anteil ≥ 0,01 bis ≤ 1,5 Gew.-%, bezogen auf das Gesamtgewicht der Komponente A, enthalten sind.

Besonders bevorzugt sind Polyasparaginsaureester-haltige Komponenten A Zusammensetzungen, wobei Komponente A2 in einem Anteil ≥ 1 bis ≤ 80 Gew.-%, bevorzugt ≥ 10 bis ≤ 80 Gew.-%, besonders bevorzugt ≥ 25 bis

≤ 55 Gew.-%, ganz besonders bevorzugt ≥ 30 bis ≤ 50 Gew.-%, bezogen auf das Gesamtgewicht der Komponenten A1 und A2, vorhanden ist, und Fumarsäuredialkylester mit einem Anteil ≥ 0,01 bis ≤ 1,3 Gew.-%, bezogen auf das Gesamtgewicht der Komponente A, enthalten sind.

Noch mehr bevorzugt sind Polyasparaginsaureester-haltige Komponenten A Zusammensetzungen, wobei Komponente A2 in einem Anteil ≥ 1 bis ≤ 80 Gew.-%, bevorzugt ≥ 10 bis ≤ 80 Gew.-%, besonders bevorzugt ≥ 25 bis ≤ 55 Gew.-%, ganz besonders bevorzugt ≥ 30 bis ≤ 50 Gew.-%, bezogen auf das Gesamtgewicht der Komponenten A1 und A2, vorhanden ist, und Fumarsäuredialkylester mit einem Anteil ≥ 0,01 bis ≤ 1 Gew.-%, bezogen auf das Gesamtgewicht der Komponente A, enthalten sind.

Darüberhinaus bevorzugt sind Polyasparaginsaureester-haltige Komponenten A Zusammensetzungen, wobei Komponente A2 in einem Anteil ≥ 1 bis ≤ 80 Gew.-%, bevorzugt ≥ 10 bis ≤ 80 Gew.-%, besonders bevorzugt ≥ 25 bis ≤ 55 Gew.-%, ganz besonders bevorzugt ≥ 30 bis ≤ 50 Gew.-%, bezogen auf das Gesamtgewicht der Komponenten A1 und A2, vorhanden ist, und Fumarsäuredialkylester mit einem Anteil ≥ 0,01 bis ≤ 0,1 Gew.-%, bezogen auf das Gesamtgewicht der Komponente A, enthalten sind.

Am meisten bevorzugt sind Polyasparaginsaureester-haltige Komponenten A Zusammensetzungen, wobei Komponente A2 in einem Anteil ≥ 1 bis ≤ 80 Gew.-%, bevorzugt ≥ 10 bis ≤ 80 Gew.-%, besonders bevorzugt ≥ 25 bis ≤ 55 Gew.-%, ganz besonders bevorzugt ≥ 30 bis ≤ 50 Gew.-%, bezogen auf das Gesamtgewicht der Komponenten A1 und A2, vorhanden ist, und Fumarsäuredialkylester mit einem Anteil ≥ 0,01 bis ≤ 0,05 Gew.-%, bezogen auf das Gesamtgewicht der Komponente A, enthalten sind.

Sofern die Polyasparaginsaureester-haltige Komponente A1 einen oder mehrere Polyasparaginsäureester der allgemeinen Formel (II) enthält, so ist dieser/ sind diese mit einem Anteil von > 0%, bevorzugt mindestens 0,1% (≥ 0,1%), besonders bevorzugt mindestens 1% (≥ 1%), ganz besonders bevorzugt mindestens 4% (≥ 4%), und bevorzugt von maximal 20% (≤ 20%), besonders bevorzugt maximal 15% (≤ 15%) der GC Oberfläche (gemessen als Flächen-% im Gas Chromatogram) enthalten, wobei die Summe der GC Oberflächen der Verbindungen der beiden allgemeinen Formeln (I) und (II) 100% beträgt. Die angegebenen Ober- und Untergrenzen sind beliebig kombinierbar. Es gelten alle möglichen Kombinationen als offenbart.

Bevorzugt sind Polyasparaginsaureester-haltige Komponenten A Zusammensetzungen enthaltend einen oder mehrere Polyasparaginsäureester der allgemeinen Formel (I) und gegebenenfalls Formel(II), sowie der allgemeinen Formel (III), wobei die Ester eine Platin-Cobalt-Farbzahl ≤ 200, besonders bevorzugt ≤ 100 aufweisen. Die Messung der Platin-Cobalt-Farbzahl erfolgt gemäß DIN EN ISO 6271:2016-05.

Polyasparaginsaureester-haltige Komponenten A1, enthaltend einen oder mehrere Polyasparaginsäureester der allgemeinen Formel (I) und Formel (II), lassen sich durch das folgende Verfahren herstellen:

Umsetzung von Polyaminen der allgemeinen Formel (IV),

$$X\left[NH_2\right]_m \qquad (IV),$$

wobei X
für einen m-wertigen, gegebenenfalls ein oder mehrere Heteroatome enthaltenden organischen Rest steht, wie er durch Entfernung der primären Aminogruppen aus einem (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,

m für eine ganze Zahl > 1, bevorzugt für 2 steht,

mit Verbindungen der allgemeinen Formel (XI)

$$R^1OOC\text{-}CH{=}CH\text{-}COOR^2 \qquad (XI),$$

wobei $R^1$ und $R^2$
für gleiche oder verschiedene organische Reste, vorzugsweise für gleiche oder verschiedene Alkylreste mit je 1 bis 18 Kohlenstoffatomen, besonders bevorzugt für gleiche oder verschiedene Alkylreste mit je 1 bis 8 Kohlenstoffatomen, ganz besonders bevorzugt für jeweils Alkylreste wie Methyl-, Ethyl-, Propyl-, iso-Propyl-, Butyl- oder iso-Butyl-Reste und am meisten bevorzugt für Ethyl stehen,

und einer destillativen Entfernung des nicht umgesetzten Anteils an der Verbindung der allgemeinen Formel (XI).

Beispielhaft für Verbindungen der allgemeinen Formel (XI) seien die folgenden Verbindungen genannt: Maleinsäuredimethylester, -diethylester, -di-n oder -iso-propylester, -di-n-butylester, -di-2-ethyl-hexylester oder die entsprechenden Fumarsäureester. Ganz besonders bevorzugt ist Maleinsäurediethylester.

Hinsichtlich Beispielen für Verbindungen der allgenmeinen Formel (IV) und deren Vorzugsbereiche sei auf die vorangegangenen Ausführungen verwiesen.

Vorzugsweise erfolgt das oben beschriebene Verfahren zur Herstellung der Polyasparaginsaureester-haltigen Komponenten A1, enthaltend einen oder mehrere Polyasparaginsäureester der allgemeinen Formel (I) und Formel (II), in zwei Schritten. Im ersten Schritt werden die Verbindungen der allgemeinen Formel (IV) und (XI) bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (IV) zu den C=C-Doppelbindungsäquivalenten der Verbindungen der allgemeinen Formel (XI) von 1:1.2 bis 1.2:1, vorzugsweise jedoch 1:1.05 bis 1.05:1, besonders bevorzugt 1:1, bis zu einem Restgehalt an Verbindungen der allgemeinen Formel (XI) von 2 bis 15 Gew.-Prozent, bevorzugt von 3 bis 10 Gew.-Prozent umgesetzt.

Im zweiten Schritt wird der nicht umgesetzte Anteil an der Verbindungen der allgemeinen Formel (XI) destillativ entfernt.

Polyasparaginsaureester-haltige Komponenten A1, die nur Polyasparaginsäureester der allgemeinen Formel (I) enthalten, nicht jedoch der Formel (II), lassen sich analog herstellen, wobei jedoch mit einem hohen Überschuss an Verbindungen der allgemeinen Formel (XI) gearbeitet wird, d.h. in einem Verhältnis der Äquivalente der primären Aminogruppen der Verbindungen der allgemeinen Formel (IV) zu den C=C-Doppelbindungsäquivalenten der Verbindungen der allgemeinen Formel (XI) von 1:10, bevorzugt 1:5, besonders bevorzugt 1:2.

Geeignete Bedingungen während der Destillation sind ein Druckbereich zwischen 0.01 und 2 mbar und eine Temperatur des Sumpfablaufs beim Austritt aus der Destillationsapparatur ≤ 170°C und ≥ der Temperatur liegt, die sich aus der folgenden Formel (1) ergibt:

$$T(\text{Sumpfablauf}) = 27 \text{ x } \ln(p) + 150 \qquad (1)$$

wobei

| | |
|---|---|
| T(Sumpfablauf) | für die Temperatur des Sumpfablaufs in °C und |
| p | für den Druck in der Destillationsapparatur in mbar stehen. |

Durch Einhalten dieses Druckbereichs wird gewährleistet, dass einerseits moderate Temperaturen im Sumpfablauf ausreichen, um die Fumarsäuredialkylester im gewünschten Umfang abzureichern, andererseits das Verfahren im technischen Maßstab anwendbar bleibt. Bei geringerem Druck wird die Gasdichte zu gering und die erforderlichen Apparate deshalb so groß, dass das Verfahren aus wirtschaftlicher Sicht nachteilig wird.

Bevorzugt ist die Temperatur des Sumpfablaufs ≤ 170°C, dabei jedoch mindestens 20 K oberhalb der Temperatur, die sich aus der Formel (1) ergibt, besonders bevorzugt liegt sie zwischen 20 K und 40 K oberhalb der Temperatur, die sich aus der Formel (1) ergibt jedoch nicht oberhalb von 170°C.

Polyasparaginsaureester-haltige Komponenten A2 lassen sich analog den Polyasparaginsaureester-haltigen Komponenten A1 herstellen, durch

Umsetzung von Polyaminen der allgemeinen Formel (V)

$$Z \left[ NH_2 \right]_p \qquad (V),$$

wobei Z

für einen p-wertigen, gegebenenfalls ein oder mehrere Heteroatome enthaltenden organischen Rest steht, wie er durch Entfernung der primären Aminogruppen aus einem entsprechenden, aliphatisch gebundene primäre Aminogruppen aufweisenden Polyetherpolyamin des Molekulargewichtsbereichs 200 bis 2000 g/mol erhalten

werden kann, und der weitere, gegenüber Isocyanatgruppen reaktive und/oder bei Temperaturen bis 100°C inerte funktionelle Gruppen enthalten kann, und

p für eine ganze Zahl > 1, bevorzugt für 2 oder 3 steht,

mit Verbindungen der allgemeinen Formel (XII)

$R^3OOC\text{-}CH\text{=}CH\text{-}COOR^4$ (XII),

wobei
$R^3$ und $R^4$ für gleiche oder verschiedene Alkylreste mit je 1 bis 18 Kohlenstoffatomen, bevorzugt gleiche oder verschiedene Alkylreste mit je 1 bis 8 Kohlenstoffatomen und ganz besonders bevorzugt für jeweils Alkylreste wie Methyl-, Ethyl-, Propyl-, iso-Propyl-, Butyl- oder iso-Butyl-Reste und am meisten bevorzugt für Ethyl stehen,

und einer destillativen Entfernung des nicht umgesetzten Anteils an der Verbindung der allgemeinen Formel (XII).

Beispielhaft für Verbindungen der allgemeinen Formel (XII) seien die folgenden Verbindungen genannt: Maleinsäuredimethylester, -diethylester, -di-n oder -iso-propylester, -di-n-butylester, -di-2-ethyl-hexylester oder die entsprechenden Fumarsäureester. Ganz besonders bevorzugt ist Maleinsäurediethylester.

Hinsichtlich Beispielen für Verbindungen der allgenmeinen Formel (V) und deren Vorzugsbereiche sei auf die vorangegangenen Ausführungen verwiesen.

Vorzugsweise erfolgt das oben beschriebene Verfahren zur Herstellung der Polyasparaginsaureester-haltigen Komponenten A2, enthaltend einen oder mehrere Polyasparaginsäureester der allgemeinen Formel (III) in zwei Schritten. Im ersten Schritt werden die Verbindungen der allgemeinen Formel (V) und (XII) bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (V) zu den C=C-Doppelbindungsäquivalenten der Verbindungen der allgemeinen Formel (XII) von 1:10, bevorzugt 1:5, besonders bevorzugt 1:2, bis zu einem Restgehalt an Verbindungen der allgemeinen Formel (XII) von 2 bis 15 Gew.-Prozent, bevorzugt von 3 bis 10 Gew.-Prozent umgesetzt.

Im zweiten Schritt wird der nicht umgesetzte Anteil an der Verbindungen der allgemeinen Formel (XII) destillativ entfernt. Bezüglich der Destillationsbedingungen gilt das oben zur Herstellung Polyasparaginsaureester-haltiger Komponenten A1 Ausgeführte analog.

Komponente A kann durch Abmischen der einzeln synthetisierten Komponenten A1 und A2 erhalten werden.

In einem alternativen Verfahren kann Komponente A auch hergestellt werden, indem eine Mischung aus Polyaminen der allgemeinen Formel (IV) und Polyetherpolyaminen der allgemeinen Formel (V) zunächst mit Verbindungen der allgemeinen Formel (XI) umgesetzt wird und der nicht umgesetzte Anteil an der Verbindung der allgemeinen Formel (XI) in einem zweiten Schritt destillativ entfernt wird, wobei für X, m, Z, p, $R^1$ und $R^2$ die vorangegangene Beschreibung und vorangegangenen Vorzugsbereiche gelten und zusätzlich gilt: $R^1 = R^3$ und $R^2 = R^4$.

Das Mischungsverhältnis der Verbindungen der allgemeinen Formel (IV) und (V) im ersten Schritt beträgt dabei bevorzugt $\geq$ 1 bis $\leq$ 80 Gew.-%, bevorzugt $\geq$ 10 bis $\leq$ 80 Gew.-%, besonders bevorzugt $\geq$ 25 bis $\leq$ 55 Gew.-%, ganz besonders bevorzugt $\geq$ 30 bis $\leq$ 50 Gew.-% der Verbindung der allgemeinen Formel (V), bezogen auf das Gesamtgewicht der Verbindungen der allgemeinen Formel (IV) und (V). Bevorzugt wird die Mischung bei Temperaturen zwischen 0°C und 100°C, vorzugsweise 20° bis 80°C und besonders bevorzugt 20° bis 60°C, in einem Verhältnis der Äquivalente der primären Aminogruppen der Verbindungen der allgemeinen Formel (IV) und (V) (Summe) zu den C=C-Doppelbindungsäquivalenten der Verbindungen der allgemeinen Formel (XI) von 1:1.2 bis 1.2:1, vorzugsweise jedoch 1:1.05 bis 1.05:1, besonders bevorzugt 1:1, bis zu einem Restgehalt an Verbindungen der allgemeinen Formel (XI) von 2 bis 15 Gew.-Prozent, bevorzugt von 3 bis 10 Gew.-Prozent umgesetzt.

Soll die Komponente A frei sein von Verbindungen der allgemeinen Formel (II), so wird in einem Verhältnis der Äquivalente der primären Aminogruppen der Verbindungen der allgemeinen Formel (IV) und (V) (Summe) zu den C=C-Doppelbindungsäquivalenten der Verbindungen der allgemeinen Formel (XI) von 1:10, bevorzugt 1:5, besonders bevorzugt 1:2 gearbeitet.

Bezüglich der Destillationsbedingungen im zweiten Schritt gilt das zuvor bei der Beschreibung der Herstellung der einzelnen Komponenten A1 und A2 Ausgeführte analog.

Die erfindungsgemäßen zweikomponentigen Beschichtungszusammensetzungen enthalten mindestens eine Polyisocyanatkomponente B.

Geeignete Polyisocyanatkomponenten B sind organische Polyisocyanate mit einer mittleren NCO-Funktionalität von mindestens 2 und einem Molekulargewicht von mindestens 140 g/mol. Gut geeignet sind vor allem unmodifizierte organische Polyisocyanate des Molekulargewichtsbereichs 140 bis 300 g/mol, Lackpolyisocyanate eines Molekulargewichts im Bereich von 300 bis 1000 g/mol, sowie Urethan-, Harnstoff- und / oder Allophanatgruppen- aufweisende NCO-Prepolymere eines über 400 g/mol liegenden Molekulargewichtes oder deren Gemische.

Unter dem Begriff "Lackpolyisocyanate" sind im Sinne der Erfindung Verbindungen oder Gemische von Verbindungen zu verstehen, die durch an sich bekannte Oligomerisierungsreaktion von einfachen Polyisocyanaten erhalten werden können. Geeignete Oligomerisierungsreaktionen sind z.B. die Carbodiimidisierung, Dimerisierung, Trimerisisierung, Biuretisierung, Harnstoffbildung, Urethanisierung, Allophanatisierung und/oder Cyclisierung unter Ausbildung von Oxadiazinstrukturen. Bei Oligomerisierung können mehrere der genannten Reaktionen gleichzeitig oder nacheinander ablaufen.

Bevorzugt handelt es sich bei den "Lackpolyisocyanaten" um Biuretpolyisocyanate, Isocyanuratgrupen-aufweisende Polyisocyanate, Isocyanurat- und Uretdiongruppen-aufweisende Polyisocyanatgemische, Urethan- und/oder Allophanatgruppen-aufweisende Polyisocyanate oder um Isocyanurat- und Allophanatgruppen-aufweisende Polyisocyanatgemische auf Basis einfacher organischer Polyisocyanate.

Ebenfalls geeignet als Polyisocyanatkomponente B sind die an sich bekannten Isocyanatgruppen aufweisenden Prepolymere auf Basis einfacher organischer Polyisocyanate und/oder auf Basis von Lackpolyisocyanaten einerseits und organischen Polyhydroxyverbindungen eines über 300 g/mol liegenden Molekulargewichts andererseits. Während es sich bei den Urethangruppen-aufweisenden Lackpolyisocyanaten um Derivate von niedermolekularen Polyolen des Molekulargewichtsbereichs von 62 bis 300 g/mol handelt, geeignete Polyole sind beispielsweise Ethylenglykol, Propylenglykol, Trimethylolpropan, Glycerin oder Gemische dieser Alkohole, werden zur Herstellung der Isocyanatgruppen aufweisenden Prepolymeren Polyhydroxyverbindungen eines über 300 g/mol, bevorzugt über 400 g/mol, besonders bevorzugt eines zwischen 400 und 8000 g/mol liegenden Molekulargewichts eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Bei der Herstellung der Isocyanatgruppen aufweisenden Prepolymeren können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten und höhermolekularen NCO-Prepolymeren resultieren, die ebenfalls als erfindungsgemäße Polyisocyanatkomponente b) geeignet sind.

Zur Herstellung der Isocyanatgruppen aufweisenden Prepolymeren oder deren Gemischen mit den Lackpolyisocyanaten werden einfache organische Polyisocyanate der nachstehend beispielhaft genannten Art oder Lackpolyisocynate mit den höhermolekularen Hydroxylverbindungen oder deren Gemischen mit niedermolekularen Polyhydroxylverbindungen der beispielhaft genannten Art unter Einhaltung eines NCO/OH Aquivalentverhaltnisses von 1.1:1 bis 40:1, bevorzugt 2:1 bis 25:1 unter Urethan und / oder Allophanatbildung umgesetzt. Gegebenenfalls kann bei Verwendung eines Überschusses an destillierbarem einfachem organischem Polyisocyanat dieser im Anschluss an die Umsetzung destillativ entfernt werden, so dass monomerenfreie Isocyanatgruppen aufweisende NCO-Prepolymere vorliegen, die ebenfalls als Polyisocyanatkomponente b) eingesetzt werden können.

Beispiele für geeignete einfache organische Polyisocyanate sind 1,4-Diisocyanatobutan, 1,5-Diisocyanatopentan, 1,6-Diisocyanatohexan (HDI), 1,5-Diisocyanato-2,2-dimethylpentan, 2,2,4-bzw. 2,4,4-Trimethyl-1,6-diisocyanatohexan, Tetramethylxylylendiisocyanat (TMXDI) 1-Isocyanato-3,3,5-trimethyl-5-isocyanatomethylcyclohexan (Isophorondiisocyanat, IPDI), 1-Isocyanato-1-methyl-4-(3)-isocyanatomethylcyclohexan, Dicyclohexylmethan-2,4'-und/oder 4,4'-diisocyanat, 1,10-Diisocyanatodecan, 1,12-Diisocyanatododecan, Cyclohexan-1,3- und -1,4-diisocyanat, Xylylendiisocyanat-Isomere, Triisocyanatononan (TIN), Naphthylen-1,5-diisocyanat, 2,4-Diisocyanatoluol oder dessen Gemische mit 2,6-Diisocyanatotoluol mit bevorzugt, bezogen auf Gemische, bis zu 35 Gew.-% 2,6-Diisocyanatotoluol, 2,2'-, 2,4'-, 4,4'-, Diisocyanatodiphenylmethan oder technische Polyisocyanatgemische der Diphenylmethanreihe, oder beliebige Gemische der genannten Polyisocyanate.

Bevorzugt kommen dabei aliphatische, cycloaliphatische oder araliphatische Polyisocyanate, ausgewählt aus der Gruppe 1,4-Diisocyanatobutan, 1,5-Diisocyanatopentan, 1,6-Diisocyanatohexan (HDI), 1,5-Diisocyanato-2,2-dimethylpentan, 2,2,4- bzw. 2,4,4-Trimethyl-1,6-diisocyanatohexan, Tetramethylxylylendiisocyanat (TMXDI) 1-Isocyanato-3,3,5-trimethyl-5-isocyanatomethylcyclohexan (Isophorondiisocyanat, IPDI), 1-Isocyanato-1-methyl-4-(3)-isocyanatomethylcyclohexan, Dicyclohexylmethan-2,4'-und/oder 4,4'-diisocyanat, 1,10-Diisocyanatodecan, 1,12-Diisocyanatododecan, Cyclohexan-1,3- und -1,4-diisocyanat, Xylylendiisocyanat-Isomere, Triisocyanatononan (TIN), oder beliebige Gemische derartiger Polyisocyanate, zum Einsatz.

Prinzipiell ist natürlich auch der Einsatz von Mischungen verschiedener Polyisocyanatkomponenten der vorstehend genannten Art möglich.

Neben der Polyasparaginsaureester-haltigen Komponente A kann die erfindungsgemäße zweikomponentige Zusammensetzung weitere gegenüber Isocyanatgruppen reaktionsfähige Komponenten (Komponenten C) enthalten.

Dies können beispielsweise niedermolekulare Polyole des Molekulargewichtsbereichs von 62 bis 300 g/mol, beispielsweise Ethylenglykol, Propylenglykol, Trimethylolpropan, Glycerin oder Gemische dieser Alkohole, oder Polyhydroxyverbindungen eines über 300 g/mol, bevorzugt über 400 g/mol, besonders bevorzugt eines zwischen 400 und

8000 g/mol liegenden Molekulargewichts sein. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Weiterhin kann die erfindungsgemäße zweikomponentige Zusammensetzung Hilfs- und Zusatzstoffe D enthalten.

Dazu zählen beispielsweise anorganische und organische Pigmente, wie beispielsweise Titandioxid, Zinkoxid, Eisenoxide, Chromoxide oder Russe, und Füllstoffe, wie beispielsweise Schwerspat, Kreide oder Talcum. Eine ausführliche Übersicht über Pigmente und Füllstoffe für Beschichtungen gibt das "Lehrbuch der Lacke und Beschichtungen, Band II, Pigmente, Füllstoffe, Farbstoffe", H. Kittel, Verlag W.A. Colomb in der Heenemann GmbH, Berlin-Oberschwandorf, 1974, S. 17-265.

Zu den Hilfs- und Zusatzstoffen D gehören auch Katalysatoren/Aktivatoren wie zum Beispiel Titan-, Zirkonium-, Bismut-, Zinn- und/oder eisenhaltigen Katalysatore, wie sie beispielsweise in WO 05058996 beschrieben sind. Möglich ist auch eine Zugabe von Aminen oder Amidinen. Der Anteil an Vernetzungskatalysator in der Zusammensetzung beträgt vorzugsweise 0,001 bis 5 Gew.-% (≥ 0,001 bis ≤ 5 Gew.-%), bevorzugt 0,005 bis 2 Gew.-% (≥ 0,005 bis ≤ 2 Gew.-%), besonders bevorzugt 0,01 bis 1 Gew.-% (≥ 0,01 bis ≤ 1 Gew.-%), bezogen auf das Gesamtgewicht der zweikomponentigen Zusammensetzung.

Beispiele weiterer geeigneter Hilfs- und Zusatzstoffe D sind Lackadditive, wie Lichtschutzmittel wie UV-Absorber und sterisch gehinderte Amine (HALS), weiterhin Stabilisatoren, Entschäumungs-, Antikrater- und/oder Netzmittel, Verlaufsmittel, filmbildende Hilfsmittel, Reaktivverdünner, Biozide, Lösemittel oder Substanzen zur Rheologiesteuerung. Der Einsatz von Lichtschutzmitteln insbesondere von UV-Absorber wie beispielsweise substituierten Benztriazolen, S-Phenyltriazinen oder Oxalaniliden sowie sterisch gehinderten Aminen insbesondere mit 2,2,6,6-Tetramethylpiperidyl-Strukturen - als HALS bezeichnet - ist beispielhaft beschrieben in A. Valet, Lichtschutzmittel für Lacke, Vincentz Verlag, Hannover, 1996.

Stabilisatoren wie beispielsweise Radikalfänger und andere Polymerisationsinhibitoren wie sterisch gehinderte Phenole stabilisieren Lackkomponenten während der Lagerung und sollen Verfärbungen während der Aushärtung verhindern. Netz- und Verlaufsmittel verbessern die Oberflächenbenetzung und/oder den Verlauf von Lacken. Beispiele sind Fluortenside, Silikontenside sowie spezielle Polyacrylate. Rheologiesteuernde Additive sind wichtig um die Eigenschaften des ZweiKomponenten-Systems bei der Applikation und in der Verlaufsphase auf dem Substrat zu steuern und sind beispielsweise aus den Patentschriften WO 9422968, EP0276501, EP0249201 oder WO 9712945 bekannt. Weiterhin können Wasserfänger, wie z.B. Triethylorthoformiat, Toluolsulfoisocyanat, Monooxazolidine oder Molekularsiebe, und Hydrolyseschutzmittel, wie z.B. Carbodiimide, eingesetzt werden. Der Anteil an Lackadditiven in der Zusammensetzung beträgt vorzugsweise 0,5 bis 15 Gew.-% (≥ 0,5 bis ≤ 15 Gew.-%), bevorzugt 1 bis 10 Gew.-% (≥ 1 bis ≤ 10 Gew.-%), besonders bevorzugt 2 bis 7 Gew.-% (≥ 2 bis ≤ 7 Gew.-%), bezogen auf das Gesamtgewicht der zweikomponentigen Zusammensetzung. Eine ausführliche Übersicht über Lackadditive findet sich in dem "Lehrbuch der Lacke und Beschichtungen, Band III, Lösemittel, Weichmacher, Additive, Zwischenprodukte", H. Kittel, Verlag W.A. Colomb in der Heenemann GmbH, Berlin-Oberschwandorf, 1976, S. 237-398.

Ebenfalls als Hilfs- und Zusatzstoffe D gelten Lösungsmittel. Das Lösungsmittel kann ein organisches Lösungsmittel oder ein Gemisch organischer Lösungsmittel sein oder Wasser oder ein Gemisch aus organischen(m) Lösungsmittel(n) und Wasser. Geeignete Lösungsmittel sind in dem Fachmann bekannter Art und Weise abgestimmt auf die Zusammensetzung sowie das Applikationsverfahren einzusetzen. Lösemittel sollen die eingesetzten Komponenten lösen und deren Vermischung fördern sowie Unverträglichkeiten vermeiden. Weiterhin sollen sie während der Applikation und der Härtung die Beschichtung auf die ablaufende Vernetzungsreaktion abgestimmt verlassen, so dass eine lösemittelfreie Beschichtung mit möglichst guter Optik und ohne Fehlstellen wie Kocher oder Nadelstiche entsteht. Insbesondere kommen Lösemittel in Betracht, die in der Zwei Komponenten Technologie zur Anwendung kommen. Beispiele für organische Lösungsmittel sind Ketone wie Aceton, Methylethylketon oder Hexanon, Ester wie Ethylacetat, Butylacetat, Methoxyproylacetat, substituierte Glykole und andere Ether, Aromaten wie Xylol oder Solventnaphtha wie z.B. der Fa. Exxon-Chemie sowie Gemische der genannten Lösemittel. Liegt der NCO-reaktive Teil der Zusammensetzung als wässrige Dispersion vor, eignet sich auch Wasser als Löse- bzw. Verdünnungsmittel. Sofern vorhanden, beträgt der Anteil an Lösungsmittel in der Zusammensetzung vorzugsweise 0,5 bis 40 Gew.-% (≥ 0,5 bis ≤ 40 Gew.-%), bevorzugt 1 bis 30 Gew.-% (≥ 1 bis ≤ 30 Gew.-%), besonders bevorzugt 2 bis 25 Gew.-% (≥ 2 bis ≤ 25 Gew.-%), bezogen auf das Gesamtgewicht der der zweikomponentigen Zusammensetzung.

Bevorzugt wird bei dem erfindungsgemäßen Verfahren lösemittelfrei gearbeitet.

Vorzugsweise beträgt das Verhältnis der Polyisocyanatkomponente B zu der Polyasparaginsaureester-haltigen Komponente A in der Zusammensetzung bezogen auf die Stoffmengen der Polyisocyanatgruppen zu den NCO-reaktiven Gruppen von 0,5 zu 1,0 bis 3,0 zu 1,0. Besonders bevorzugt ist ein Verhältnis von 0,9 zu 1,0 bis 1,5 zu 1,0. Ganz besonders bevorzugt ist ein Verhältnis von 1,05 zu 1,0 bis 1,25 zu 1,0.

Die erfindungsgemäße zweikomponentige Zusammensetzung ist vorzugsweise keine aufschäumbare oder schaumbildende Zusammensetzung. Die Zusammensetzung ist vorzugsweise nicht radikalisch polymerisierbar, insbesondere nicht photo-polymerisierbar, d.h. die Zusammensetzung härtet nicht durch radikalische Prozesse aus, insbesondere nicht durch radikalische Polymerisationsprozesse die durch aktinische Strahlung initiiert werden.

Die Herstellung der erfindungsgemäßen zweikomponentigen Beschichtungszusammensetzung erfolgt nach in der Technologie der Lacke und Beschichtungen an sich bekannten Methoden.

Eine isocyanatreaktive (R) und eine isocyanathaltige Komponente (H) werden zunächst getrennt durch Vermischen der jeweiligen isocyanatreaktiven Komponenten A und C, bzw. durch Vermischen der jeweiligen Polyisocyanatkomponenten B hergestellt. Die Hilfs- und Zusatzstoffe D werden bevorzugt der isocyanatreaktiven Komponente R beigemischt. Ein Vermischen der so hergestellten Komponenten R und H erfolgt erst unmittelbar vor oder während der Applikation. Erfolgt das Vermischen vor der Applikation ist zu beachten, dass die Reaktion der Bestandteile nach dem Vermischen bereits startet. Je nach Auswahl der Komponenten und der Zusatzstoffe wird die Reaktion unterschiedlich schnell ablaufen. Die Verarbeitungszeit innerhalb derer die Zusammensetzung appliziert werden muss, auch als Topfzeit bezeichnet und definiert als die Zeit von der Vermischung der Komponenten bis zur Verdoppelung der Ausgangsviskosität und/oder der Auslaufzeit (bestimmt nach DIN EN ISO 2431:2012-03, jedoch unter Verwendung eines DIN 4 Auslaufbechers), liegt dann je nach Auswahl der Komponenten im Bereich von 1 Minute bis zu 24 Stunden, meist im Bereich von 10 Minuten bis 8 Stunden. Die Bestimmung der Topfzeit erfolgt nach dem Fachmann bekannten Methoden.

Die Erfindung betrifft auch ein Verfahren zum Beschichten eines Substrats, welches mindestens folgende Schritte umfasst:

i) Aufbringen der vorstehend beschriebenen zweikomponentigen Beschichtungszusammensetzung auf mindestens einen Teil eines zu beschichtenden Substratsund
ii) Härten der Beschichtungszusammensetzung aus Schritt i).

Weitere Gegenstände der vorliegenden Erfindung sind daher die Verwendung der erfindungsgemäßen zweikomponentigen Beschichtungszusammensetzungen zur Herstellung von Beschichtungen auf Substraten, das oben beschriebene Verfahren zum Beschichten eines Substrats, sowie die so erhältlichen beschichteten Substrate selbst.

Die Substrate können bereits mit einer oder mehreren Lackschichten ganz oder teilweise beschichtet sein. Diese Lackschichten können noch ungehärtet oder feucht, teilgehärtet oder vollständig gehärtet sein, vorzugsweise sind die weiteren Lackschichten auf dem Substrat teilgehärtet oder vollständig gehärtet. Beispiele für Lackschichten sind Grundierungen, Primer, Füller, Spachtel, Basislacke oder bereits vollständig lackierte Substrate, die nach einer eventuellen Vorbehandlung wie Anschleifen oder Plasmaaktivierung erneut überschichtet werden.

Die zweikomponentigen Beschichtungszusammensetzungen dienen insbesondere zur Herstellung von Schutzbeschichtungen im Bereich Bau und Windenergie. Als Beispiel sei die Verwendung zur Dachbeschichtung, zur Fußbodenbeschichtung und zur Beschichtung von Rotorblättern bei Windrädern, bzw. deren Führungskanten (Leading Edge), genannt

Weitere, bevorzugte Gegenstände der vorliegenden Erfindung sind daher die Verwendung der vorstehend beschriebenen zweikomponentigen Beschichtungszusammensetzungen zur Herstellung von Beschichtungen auf Substraten, das oben beschriebene Verfahren zum Beschichten von Substraten mit diesen Beschichtungen, sowie die so erhältlichen beschichteten Substrate selbst.

Die Beschichtungszusammensetzung kann durch herkömmliche Auftragungsverfahren aufgetragen werden. Beispiele für Auftragsverfahren sind Aufpinseln, Bürsten, Rakeln, Rollen und Sprühen, bevorzugt ist ein Sprüh- oder Rollauftrag. An das Aufbringen schließt sich, nach einer optionalen Aushärtung bzw. die Trocknung der erfindungsgemäßen Zusammensetzung auf dem Substrat bzw. Objekt an. Diese erfolgt nach den in der Beschichtungstechnologie üblichen Methoden entweder unter Umgebungsbedingungen bezüglich Temperatur und Luftfeuchte oder unter forcierten Bedingungen beispielsweise durch Temperaturerhöhung in Öfen, Einsatz von Strahlung wie beispielsweise Infrarot- oder Nahinfrarot- oder Mikrowellenstrahlung, sowie Einsatz von entfeuchteter und/oder erwärmter Luft oder anderen Gasen. Bevorzugt ist dabei, auf den Einsatz von Geräten zur forcierten Aushärtung zu verzichten. Die aufgetragene Beschichtungszusammensetzung wird zum Beispiel bei Temperaturen von -20 bis 100°C, vorzugsweise von -10 bis 80°C, bevorzugter von 0 bis 60°C und am meisten bevorzugt von 10 bis 40°C ausgehärtet. Auch wenn nicht bevorzugt, geringere Härtungstemperaturen können ebenfalls verwendet werden, werden jedoch zu längeren Härtungszeiten führen.

Es ist ebenfalls möglich, auch wenn nicht bevorzugt, die Zusammensetzung bei höheren Temperaturen, beispielsweise 80 bis 160°C oder höher, auszuhärten.

Nach dem Aushärten der ersten Beschichtung kann eine weitere Beschichtung aufgebracht und ebenfalls ausgehärtet werden.

Ein weiterer Gegenstand der Erfindung ist die Verwendung der zweikomponentigen Beschichtungszusammensetzungen zur Herstellung von Beschichtungen mit einer Bruchdehnung bestimmt nach DIN EN ISO 527 bei 23°C und einer relativen Luftfeuchtigkeit von 50% von wenigstens 8,6 MPA (≥ 8,6 MPA) und mit einem Weiterreißwiderstand bestimmt nach DIN ISO 34-1 bei 23°C und einer relativen Luftfeuchtigkeit von 50% von wenigstens 7 N/mm (≥ 7 N/mm).

Bevorzugt beträgt die Bruchdehnung bestimmt nach DIN EN ISO 527 bei 23°C und einer relativen Luftfeuchtigkeit von 50% wenigstens 10 MPA (≥ 10 MPA), besonders bevorzugt wenigstens 15 MPA (≥ 15 MPa).
Bevorzugt beträgt der Weiterreißwiderstand bestimmt nach DIN ISO 34-1 bei 23°C und einer relativen Luftfeuchtigkeit von 50% wenigstens 10 N/mm (≥ 10 N/mm), besonders bevorzugt wenigstens 15 N/mm (≥ 15 N/mm).

## Experimenteller Teil

**Methoden:**

Fumarsäurediethylester -Gehalte wurden quantitativ mit Hilfe einer GC-Methode mit einem internen Standard bestimmt. Es wurde ein 6890 Gaschromatograph der Fa. Agilent mit einer Standard-GC-Kapillare (100% Polysiloxan-Phase) und einem FID Detektor verwendet. Die Temperatur des Injektors (Splitausgang) war 180°C, als Trägergas wurde Helium verwendet. Die Bestimmungsgrenze diese Methode betrug 200 ppm.
Sämtliche Viskositatsmessungen erfolgten mit einem Physica MCR 51 Rheometer der Fa. Anton Paar Germany GmbH (Deutschland) nach DIN EN ISO 3219:1994-10 bei 23°C.
Die Bestimmung der Zugfestigkeit, sowie der Bruchdehnung erfolgte nach DIN EN ISO 527.
Die Bestimmung der Weiterreißfestigkeit erfolgte nach DIN ISO 34-1.

**Edukte:**

Polyasparaginsäureester

PAS 1:
Desmophen® NH 1420, kommerziell erhältlicher Polyasparaginsäureester der Fa. Covestro . Kenndaten:

Fumarsäurediethylester (GC) 1,62 Gew.-Prozent

PAS 2:
Desmophen® NH 1423 LF, kommerziell erhältlicher Polyasparaginsäureester der Fa. Covestro . Kenndaten:

Fumarsäurediethylester (GC) 0,05 Gew.-Prozent

PAS 3:
Desmophen® NH 1720, kommerziell erhältlicher Polyasparaginsäureester der Fa. Covestro . Kenndaten:

Fumarsäurediethylester (GC) 1,02 Gew.-Prozent

PAS 4:
Desmophen® NH 1723 LF, kommerziell erhältlicher Polyasparaginsäureester der Fa. Covestro . Kenndaten:

Fumarsäurediethylester (GC) 0,04 Gew.-Prozent

PAS 5:
Desmophen® NH 1420, kommerziell erhältlicher Polyasparaginsäureester der Fa. Covestro. Kenndaten:

Fumarsäurediethylester (GC) 3,5 Gew.-Prozent

PAS 6:
Desmophen® NH 1420, kommerziell erhältlicher Polyasparaginsäureester der Fa. Covestro. Kenndaten:

Fumarsäurediethylester (GC) 5,5 Gew.-Prozent

PAS 7:
Desmophen® NH 1720, kommerziell erhältlicher Polyasparaginsäureester der Fa. Covestro. Kenndaten:

Fumarsäurediethylester (GC) 3,5 Gew.-Prozent

PAS 8:
Desmophen® NH 1720, kommerziell erhältlicher Polyasparaginsäureester der Fa. Covestro. Kenndaten:

Fumarsäurediethylester (GC) 5,5 Gew.-Prozent

Die unterschiedlichen Fumarsäurediethylestergehalte bei PAS 1, 5 und 6, bzw. PAS 3, 7 und 8 basieren auf unterschiedlichen Reifegraden.

Polyisocyanate:

Desmodur® N3900, kommerziell erhältlicher Polyisocyanat der Fa. Covestro.
Kenndaten:

NCO-Gehalt ca. 23,5 Gew.-Prozent

Desmodur® E 30700, kommerziell erhältlicher Polyisocyanate der Fa. Covestro.
Kenndaten:

NCO Gehalt ca. 11 Gew.-Prozent

**Herstellung Beschichtungen**

Die Herstellung der Beschichtungen erfolgte bei Raumtemperatur, indem die Bestandteile der Komponente A und Komponente B in ein Becher (Speedmixerbecher) gegeben wurden und bei ca. 2100 U/min für ca. 30 Sek. homogenisiert.

Schichtaufbau

Die verwendeten Beschichtungen wurden mit der beschriebenen Applikation auf eine Polypropylenplatte aufgetragen und bei 23°C / 50% rel. Luftfeuchtigkeit vernetzt. Für die Tests wurden ca. 1mm dicke Beschichtungen durch Gießen hergestellt. Die Beschichtungen wurden erst für einen Tag bei Raumtemperatur gelagert und anschließend für 3 Tage bei 50°C gelagert. Nach der Lagerung wurden die Prüfkörper mittels Stanze hergestellt.

Tabelle 1. Zusammensetzung der Beschichtungen

| Komponente A (Gew%) | Beispiel 1 | Beispiel 2 | Beispiel 5 | Beispiel 6 | Beispiel 3 | Beispiel 4 | Beispiel 7 | Beispiel 8 |
|---|---|---|---|---|---|---|---|---|
| | Erfindungsgemäß | | Vergleich | | Erfindungsgemäß | | Vergleich | |
| Desmophen® NH 1420, FSDEE 1,62 Gew.-% | | 23,39 | | | | 32,55 | | |
| Desmophen® NH 1423 LF, FSDEE 0,05 Gew.-% | 23,17 | | | | 32,24 | | | |
| Desmophen® NH 1720, FSDEE 1,02 Gew.-% | | 23,39 | | | | 13,95 | | |
| Desmophen® NH 1723 LF, FSDEE 0,04 Gew.-% | 23,17 | | | | 13,82 | | | |
| Desmophen® NH 1420, FSDEE 3,5 Gew.-% | | | 23,39 | | | | 32,55 | |
| Desmophen® NH 1420, FSDEE 5,5 Gew.-% | | | | 23,39 | | | | 32,55 |
| Desmophen® NH 1720, FSDEE 3,5 Gew.-% | | | 23,39 | | | | 13,95 | |
| Desmophen® NH 1720, FSDEE 5,5 Gew.-% | | | | 23,39 | | | | 13,95 |
| Fumarsäurediethylester gehalt, bezogen auf Gesamtgewicht der Komponente A | 0,05 | 1,32 | 3,50 | 5,50 | 0,05 | 1,44 | 3,50 | 5,50 |
| Mischungsverhältnis von NH 14xx: NH 17xx | 1:1 | | | | 7:3 | | | |
| | | | | | | | | |
| Komponente B (Gew%) | | | | | | | | |
| Desmodur® N 3900 | 13,42 | 13,31 | 13,31 | 13.31 | 13,49 | 13,38 | 13,38 | 13,38 |
| Desmodur® E 30700 | 40,25 | 39,92 | 39,92 | 39.92 | 40,46 | 40,13 | 40,13 | 40,13 |
| Gesamtgewicht | 100,0 | 100,0 | 100,00 | 100,00 | 100,0 | 100,00 | 100,00 | 100,00 |
| FSDEE = Fumarsäurediethylestergehalt | | | | | | | | |

Tabelle 2. Mechanische Eigenschaften der Beschichtungen aus den Beispielen 1 bis 8.

| | Beispiel 1 | Beispiel 2 | Beispiel 5 | Beispiel 6 | Beispiel 3 | Beispiel 4 | Beispiel 7 | Beispiel 8 |
|---|---|---|---|---|---|---|---|---|
| | Erfindungsgemäß | | Vergleich | | Erfindungsgemäß | | Vergleich | |
| **Zugfestigkeit** 23°C / 50% rel. Luftfeuchtigkeit | | | | | | | | |
| Bruchdehnung | 12,1 MPa | 8,8 MPa | 2,7 MPa | 2,2 MPa | 16,6 MPa | 10,2 MPa | 8,4 MPa | 3,8 MPa |
| | | | | | | | | |
| **Reißwiderstand** 23°C / 50% rel. Luftfeuchtigkeit | | | | | | | | |
| Weiterreißwider-stand | 10,9 N/mm | 7,5 N/mm | 4,8 N/mm | 2,9 N/mm | 20,1 N/mm | 10,9 N/mm | 9,7 N/mm | 6,4 N/mm |

Wie aus Tabelle 2 ersichtlich ist, weisen Beschichtungen, die aus erfindungsgemäßen Beschichtungszusammensetzungen mit einem Fumarsäurediethylestergehalt ≤ 1,5 Gewichts-% erhalten wurden, eine deutlich höhere Zugfestigkeit (Beispiele 1 bis 4), und teilweise zudem einen deutlich höheren Reißwiderstand auf (Beispiele 1, 3 und 4), als Beschichtungen, die auf Basis herkömmlicher Polyasparaginsäureester hergestellt wurden (Beispiele 5 bis 8).

## Patentansprüche

**1.** Zweikomponentige Beschichtungszusammensetzungen (2K-Beschichtungsmittel), enthaltend

a) mindestens eine Polyasparaginsäureester-haltige Komponente A,
b) mindestens eine Polyisocyanatkomponente B
c) gegebenenfalls eine oder mehrere, von A verschiedene, gegenüber Isocyanatgruppen reaktionsfähige Komponenten C, und
d) gegebenenfalls Hilfs- und Zusatzstoffe D,

wobei Komponente A Zusammensetzungen entspricht, enthaltend

A1) einen oder mehrere Polyasparaginsäureester der allgemeinen Formel (I)

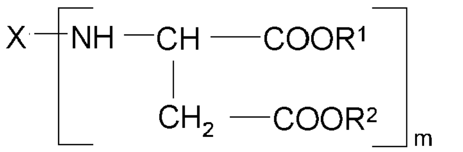

(I),

in welcher

X für einen m-wertigen, gegebenenfalls ein oder mehrere Heteroatome enthaltenden organischen Rest steht, wie er durch Entfernung der primären Aminogruppen aus einem entsprechenden, (cyclo)aliphatisch bzw. araliphatisch gebundene primäre Aminogruppen aufweisenden Polyamin des Molekulargewichtsbereichs 60 bis 6000 g/mol erhalten werden kann, und der weitere, gegenüber Isocyanatgruppen reaktive und/oder bei Temperaturen bis 100°C inerte funktionelle Gruppen enthalten kann,
$R^1$ und $R^2$ für gleiche oder verschiedene organische Reste, mit je 1 bis 18 Kohlenstoffatomen stehen,
m für eine ganze Zahl >1, bevorzugt für 2 steht,

und
gegebenenfalls einen oder mehrere Polyasparaginsäureester mit primärer Aminogruppe der allgemeinen Formel (II)

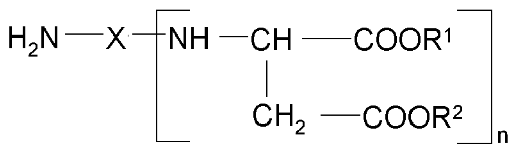

(II)

in welcher

n für m-1 steht, und
m, X und die Reste $R^1$ und $R^2$ die oben genannten Bedeutungen haben,

und
A2) einen oder mehrere Polyasparaginsäureester der allgemeinen Formel (III)

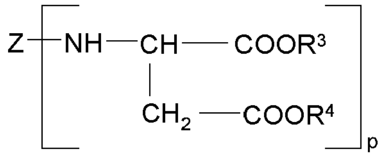

(III),

in welcher

Z für einen p-wertigen, gegebenenfalls ein oder mehrere Heteroatome enthaltenden organischen Rest steht, wie er durch Entfernung der primären Aminogruppen aus einem entsprechenden, aliphatisch gebundene primäre Aminogruppen aufweisenden Polyetherpolyamin des Molekulargewichtsbereichs 200 bis 2000 g/mol erhalten werden kann, und der weitere, gegenüber Isocyanatgruppen reaktive und/oder bei Temperaturen bis 100°C inerte funktionelle Gruppen enthalten kann,
$R^3$ und $R^4$ für gleiche oder verschiedene organische Reste, mit je 1 bis 18 Kohlenstoffatomen stehen,
p für eine ganze Zahl >1, bevorzugt für 2 oder 3 steht,

wobei Komponente A2 in einem Anteil von 1 bis 80 Gewichts-% (≥ 1 bis ≤ 80 Gewichts-%), bezogen auf das Gesamtgewicht der Komponenten A1 und A2, vorhanden ist, und
wobei in Komponente A Fumarsäuredialkylester in einer Menge von 0,01 bis 1,5 Gewichts-% (≥ 0,01 bis ≤ 1,5 Gewichts-%), bezogen auf das Gesamtgewicht der Komponente A, vorliegen.

**2.** Zweikomponentige Beschichtungszusammensetzungen (2K-Beschichtungsmittel) gemäß Anspruch 1, wobei Komponente A2 in einem Anteil ≥ 10 bis ≤ 80 Gew.-%, bezogen auf das Gesamtgewicht der Komponenten A1 und A2, vorhanden ist.

**3.** Zweikomponentige Beschichtungszusammensetzungen (2K-Beschichtungsmittel) gemäß Anspruch 1, wobei Komponente A2 in einem Anteil ≥ 25 bis ≤ 55 Gew.-%, bezogen auf das Gesamtgewicht der Komponenten A1 und A2, vorhanden ist.

**4.** Zweikomponentige Beschichtungszusammensetzungen (2K-Beschichtungsmittel) gemäß einem der Ansprüche 1 bis 3, wobei in Komponente A Fumarsäuredialkylester in einer Menge ≥ 0,01 bis ≤ 1,3 Gew.-%, bezogen auf das Gesamtgewicht der Komponente A, vorliegen.

**5.** Zweikomponentige Beschichtungszusammensetzungen (2K-Beschichtungsmittel) gemäß einem der Ansprüche 1 bis 3, wobei in Komponente A Fumarsäuredialkylester in einer Menge ≥ 0,01 bis ≤ 1 Gew.-%, bezogen auf das Gesamtgewicht der Komponente A, vorliegen.

**6.** Verfahren zum Herstellen einer Beschichtung auf einem Substrat, welches mindestens folgende Schritte umfasst:

i) Aufbringen einer zweikomponentigen Beschichtungszusammensetzung (2K-Beschichtungsmittel) gemäß einem der Ansprüche 1 bis 5 auf mindestens einen Teil eines zu beschichtenden Substrats und
ii) Härten der Beschichtungszusammensetzung aus Schritt i).

**7.** Substrate beschichtet mit einer Beschichtung erhältlich nach einem Verfahren gemäß Anspruch 6.

**8.** Verfahren gemäß Anspruch 6 oder Substrate gemäß Anspruch 7, wobei es sich um eine Beschichtung für Dächer, für Fußböden oder für Rotorblätter bei Windrädern, bzw. deren Führungskanten (Leading Edge) handelt.

Europäisches Patentamt
European Patent Office
Office européen des brevets

# EUROPÄISCHER RECHERCHENBERICHT

Nummer der Anmeldung
EP 21 19 1597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2020/260578 A1 (HEMPEL AS [DK]) 30. Dezember 2020 (2020-12-30) * Seite 1, Zeile 4 - Zeile 10; Ansprüche 1-14 * * Seite 34 - Seite 36; Tabellen 2, 4b * * Beschichtung E * * Seite 6, Zeile 27 - Zeile 31 * | 1-8 | INV. C08G18/38 C08G18/10 C08G18/72 C08G18/73 C08G18/79 C09D175/02 E04B1/00 F01D7/00 |
| T | & Covestro Deutschland Ag: "Desmophen NH 1423 - TDS", , 10. März 2021 (2021-03-10), XP055879654, Leverkusen Gefunden im Internet: URL:https://solutions.covestro.com/-/media/covestro/solution-center/products/datasheets/imported/desmophen/desmophen-nh-1423_en_87467474-20814680-20814688.pdf [gefunden am 2022-01-17] * Characteristic data; Seite 1 * | 1-8 | |
| T | & Jaekle: "Desmophen NH 1720 (ehemals NH 2850 XP) ¦ CSC JÄKLECHEMIE", , 17. Januar 2022 (2022-01-17), XP055880033, Gefunden im Internet: URL:https://www.csc-jaekle.de/lieferprogramm/produkt/450396-desmophenR-nh-1720-ehemals-nh-2850-xp/ [gefunden am 2022-01-17] * Titel; Seite 1 * | 1-8 | RECHERCHIERTE SACHGEBIETE (IPC) C08G C09D E04B F01D |

-/--

1 Der vorliegende Recherchenbericht wurde für alle Patentansprüche erstellt

| Recherchenort | Abschlußdatum der Recherche | Prüfer |
|---|---|---|
| München | 18. Januar 2022 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 21 19 1597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| T | & Covestro Deutschland Ag: "Desmophen NH 2850 XP", , 23. August 2018 (2018-08-23), XP055880041, Leverkusen Gefunden im Internet: URL:https://www.scribd.com/document/467719047/Desmophen-NH-2850-XP-pdf [gefunden am 2022-01-17] * Characteristic data, Other data; Seite 1 * | 1-8 | |
| T | & Covestro Deutschland Ag: "Desmophen NH 1720", , 13. August 2020 (2020-08-13), XP055880044, Leverkusen Gefunden im Internet: URL:https://solutions.covestro.com/-/media/covestro/solution-center/products/datasheets/imported/desmophen/desmophen-nh-1720_en_86544709-22785872-22785959.pdf [gefunden am 2022-01-17] * Characteristic data, Other data; Seite 1 * ----- | 1-8 | RECHERCHIERTE SACHGEBIETE (IPC) |
| A | EP 3 699 218 A1 (COVESTRO DEUTSCHLAND AG [DE]) 26. August 2020 (2020-08-26) * Absätze [0001], [0007], [0008]; Ansprüche 1-13 * * Absatz [0095] - Absatz [0010]; Beispiele * * Absätze [0075], [0101] - Absatz [0110]; Beispiele; Tabellen 1-12 * ----- | 1-8 | |
| | -/-- | | |

1 Der vorliegende Recherchenbericht wurde für alle Patentansprüche erstellt

| Recherchenort | Abschlußdatum der Recherche | Prüfer |
|---|---|---|
| München | 18. Januar 2022 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

Europäisches Patentamt
European Patent Office
Office européen des brevets

# EUROPÄISCHER RECHERCHENBERICHT

Nummer der Anmeldung
EP 21 19 1597

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2021/179903 A1 (ZELIZNIK RAYMOND [US] ET AL) 17. Juni 2021 (2021-06-17)<br>* Absätze [0002], [0009], [0010], [0020]; Ansprüche 1-20 *<br>* Absatz [0056] - Absatz [0058] *<br>* Absatz [0061] *<br>* Absatz [0065] - Absatz [0067] *<br>----- | 1-8 | |
| | | | RECHERCHIERTE SACHGEBIETE (IPC) |

1 Der vorliegende Recherchenbericht wurde für alle Patentansprüche erstellt

| Recherchenort | Abschlußdatum der Recherche | Prüfer |
|---|---|---|
| München | 18. Januar 2022 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 21 19 1597

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-01-2022

| Im Recherchenbericht angeführtes Patentdokument | Datum der Veröffentlichung | Mitglied(er) der Patentfamilie | Datum der Veröffentlichung |
|---|---|---|---|
| WO 2020260578 A1 | 30-12-2020 | CN 113924349 A | 11-01-2022 |
| | | WO 2020260578 A1 | 30-12-2020 |
| EP 3699218 A1 | 26-08-2020 | CN 113412293 A | 17-09-2021 |
| | | EP 3699218 A1 | 26-08-2020 |
| | | EP 3927757 A1 | 29-12-2021 |
| | | KR 20210131331 A | 02-11-2021 |
| | | WO 2020169701 A1 | 27-08-2020 |
| US 2021179903 A1 | 17-06-2021 | US 2021179903 A1 | 17-06-2021 |
| | | WO 2021119091 A1 | 17-06-2021 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0403921 A
- EP 0639628 A
- EP 0667362 A
- EP 0689881 A
- US 5214086 A
- EP 0699696 A
- EP 0596360 A
- EP 0893458 A
- DE 19701835
- EP 0470461 A
- WO 15130501 A
- WO 15130502 A
- US 5243012 A
- WO 2019057626 A1
- WO 2019057627 A1
- WO 2020169700 A1
- WO 2020169701 A1
- WO 05058996 A
- WO 9422968 A
- EP 0276501 A
- EP 0249201 A
- WO 9712945 A


### In der Beschreibung aufgeführte Nicht-Patentliteratur


- **HAUBEN WEYL.** *Meth. d. Org. Chemie,* 1957, vol. 11/1 (272
- *Usp. Khim.,* 1969, vol. 38, 1933
- *Fachartikel in Farbe und Lack,* 2017, vol. 11, 30-35
- **H. KITTEL.** Lehrbuch der Lacke und Beschichtungen, Band II, Pigmente, Füllstoffe, Farbstoffe. Verlag W.A. Colomb in der Heenemann GmbH, 1974, vol. II, 17-265
- **A. VALET.** Lichtschutzmittel für Lacke. Vincentz Verlag, 1996
- **H. KITTEL.** Lehrbuch der Lacke und Beschichtungen, Band III, Lösemittel, Weichmacher, Additive, Zwischenprodukte. Verlag W.A. Colomb in der Heenemann GmbH, 1976, vol. III, 237-398